**Europäisches Patentamt**

**European Patent Office**

**Office européen des brevets**

(11) Veröffentlichungsnummer : **0 075 785
B1**

# EUROPÄISCHE PATENTSCHRIFT

(45) Veröffentlichungstag der Patentschrift :
**12.02.86**

(21) Anmeldenummer : **82108534.7**

(22) Anmeldetag : **16.09.82**

(51) Int. Cl.⁴ : **G 03 B 42/04**

(54) **Röntgenfilmkassette.**

(30) Priorität : **25.09.81 DE U 8128066**

(43) Veröffentlichungstag der Anmeldung :
**06.04.83 Patentblatt 83/14**

(45) Bekanntmachung des Hinweises auf die Patenterteilung : **12.02.86 Patentblatt 86/07**

(84) Benannte Vertragsstaaten :
**FR GB IT**

(56) Entgegenhaltungen :
**US-A- 2 357 969
US-A- 2 810 837
US-A- 2 823 318
US-A- 3 971 470**

(73) Patentinhaber : **AGFA-GEVAERT Aktiengesellschaft
D-5090 Leverkusen 1 (DE)**

(72) Erfinder : **Müller, Jürgen
Bozzarisstrasse 7
D-8000 München 90 (DE)**
Erfinder : **Bauer, Walter
Heinrich-Wieland-Strasse 178
D-8000 München 83 (DE)**

Jouve, 18, rue St-Denis, 75001 Paris, France

## Beschreibung

Die Erfindung betrifft eine quaderförmige Röntgenfilmkassette aus formstabilem Kunststoff.

Kassetten dieser Gattung sind bereits im Handel erhältlich. Bei Gebrauch dieser aus Stabilitätsgründen aus relativ sprödem Kunststoffmaterial gefertigten Röntgenfilmkassetten kommt es immer wieder vor, daß sie beim Transport oder bei unsachgemäßer Lagerung zu Boden fallen. Bei größeren Fallhöhen, etwa über 30 bis 40 cm, und einem Auftreffen auf eine der Kassettenkanten oder Kassettenecken kommt es häufig zu einer Beschädigung der Kassette, die diese unbrauchbar macht.

Durch die US-A-2 810 837 ist bereits eine Kunststoffblattfilmkassette bekannt, die einen längs der Kassettenschmalseiten rundumlaufenden Rahmen aus gummielastischem Material aufweist. Mit diesem Rahmen sind die Kassettenflachseiten lichtdicht verbunden, wobei der gummielastische Rahmen elastische Dichtungslippen und Verschlußteile aufweist. Eine derartige Kassette mit rundumlaufendem gummielastischem Rahmen ist nicht formstabil, weshalb sie für Präzisionsaufnahmen nicht geeignet ist. Außerdem kann es beim versehentlichen Herunterfallen einer derartigen Kassette vorkommen, daß infolge der elastischen Verformung des Rahmens die Dichtungslippen sich verschieben oder der mit dem Rahmen verbundene Verschluß sich unabsichtlich öffnet. Während bei den Kassetten der eingangs genannten Gattung beim Herunterfallen Beschädigungen an den Kassetten auftreten und diese unbrauchbar machen können, kann dagegen bei den Kassetten nach der US-A-2 810 837 beim Herunterfallen der in ihnen enthaltene Film unbrauchbar werden. Letzteres kann dann, wenn es sich um bereits belichtete Filme handelt und z. B. einem Patienten nicht zugemutet werden kann, sich nochmals einer Aufnahme zu unterziehen, noch schwerwiegender als das Unbrauchbarwerden einer Kassette sein.

Der Erfindung liegt daher die Aufgabe zugrunde, eine Röntgenfilmkassette der eingangs genannten Art aus hartem oder sprödem Kunststoff durch einfache Mittel gegen Beschädigung bei Stoßbeanspruchung der Kassette, insbesondere beim Herunterfallen, zu schützen.

Diese Aufgabe wird erfindungsgemäß gelöst durch die Merkmale des Hauptanspruchs. Hierdurch wird die Aufschlagwucht beim Herunterfallen der Kassette gedämpft, die Belastung des relativ spröden Kassettenmaterials verringert und hierdurch eine Beschädigung der Kassette bei den in der Praxis vorkommenden Beanspruchungen erheblich reduziert.

Zudem wird bei dem bei modernen Röntgengeräten vorgesehenen automatischen Kassettentransport aufgrund der elastischen Kantenstücke der Kassette eine Geräuschdämpfung beim Transport erzielt.

Weitere vorteilhafte Merkmale der Erfindung sind den Unteransprüchen in Verbindung mit der nachfolgenden Beschreibung zu entnehmen, in der ein Ausführungsbeispiel der Erfindung anhand der Zeichnung näher erläutert ist.

In der Zeichnung zeigen in halbschematischer Darstellung

Figur 1 einen Ausschnitt aus einer perspektivischen Ansicht einer Röntgenfilmkassette und

Figur 2 einen Schnitt durch die Kassette gemäß Figur 1 entlang der Ebene II-II.

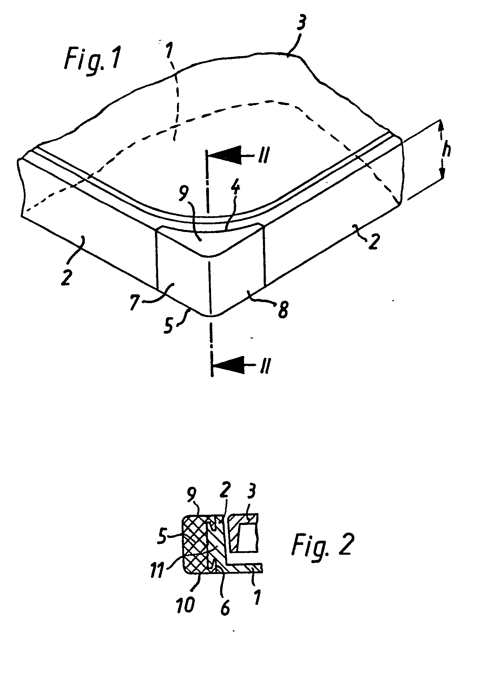

Die quaderförmige Kassette gemäß Figuren 1 und 2 umfaßt einen unteren Behälterteil mit Boden 1 und hieran angeformten Seitenwänden 2 sowie einen Kassettendeckel 3. Die Höhe h der Kassette ist geringer als deren Länge und Breite. Der untere Behälterteil sowie der Kassettendeckel sind aus einem harten, verformungsstabilen, relativ spröden Kunststoff gefertigt, nämlich beispielsweise aus ABS oder aus Polycarbonat, ggf. mit einer Verstärkung, z. B. aus Kohlefaser.

Im Bereich der Seitenkanten der Kassette, d. h. in dem Bereich, in dem sich die Seitenwände 2 schneiden würden, weist der untere Behälterteil eine Ausnehmung 4 auf. In diese Ausnehmung 4 ist jeweils ein gummielastisches Kantenstück 5 eingesetzt. Dieses elastische Kantenstück 5 besteht aus Gummi oder einem gummielastischen Kunststoff, nämlich aus einem thermoplastischen Polyurethan-Elastomer.

Die Form der zur Kassette hinweisenden Seitenfläche 6 des Kantenstückes 5 ist der Form der Ausnehmung 4 angepaßt, während die übrigen, von der Kassette wegweisenden Seitenflächen 7, 8, 9 und 10 parallel zu den Seitenflächen 2 bzw. parallel zum Kassettendeckel 3 bzw. parallel zum Kassettenboden 1 verlaufen. Die Dimensionierung des Kantenstückes 5 ist derart, daß ihre Seitenflächen 7 und 8 in einer Ebene mit den Seitenflächen 2, der Seitenfläche 9 in einer Ebene mit dem Kassettendeckel 3 und ihre Seitenfläche 10 in einer Ebene mit dem Kassettenboden 1 liegt. Hierdurch ist gewährleistet, daß durch die gummielastischen Kantenstücke Länge, Breite und Höhe der Kassette nicht verändert werden, so daß die neuerungsgemäße Kassette bezüglich ihrer Abmessungen ohne weiteres in den bisher üblichen automatischen Kassettentransporteinrichtungen verwendet werden kann. Andererseits ist durch die Lage und Form der Kantenstücke gewährleistet, daß, ausgenommen im statistisch äußerst unwahrscheinlichen Fall eines Stoßes exakt senkrecht zu einer nicht geschützten Kassettenkante, ein Stoß zunächst immer von einem elastischen Kantenstück abgefangen wird, wodurch, nachdem die Elastizität des Kantenstücks deutlich höher ist als die Elastizität des übrigen Kassettenmaterials, der Stoß gedämpft und das übrige Kassettenmaterial erheblich weniger beansprucht wird.

Wie aus Figur 2 ersichtlich ist, können die elastischen Kantenstücke an der Kassette mittels einer Schwalbenschwanzführung 11 gehalten sein. Eine solche Schwalbenschwanzführung ermöglicht einen festen Sitz des elastischen Kantenstückes an der Kassette und eine gute Kraftübertragung.

**Patentansprüche**

1. Quaderförmige Röntgenfilmkassette aus formstabilem Kunststoff, dadurch gekennzeichnet, daß entlang mindestens vier jeweils gegenüberliegenden Kanten gummielastische Kantenstücke (5) angeordnet sind, daß die Kassette im Bereich der mit den Kantenstücken (5) versehenen Kanten jeweils eine Ausnehmung (4) aufweist, daß die Kantenstücke in diese Ausnehmungen eingefügt sind und daß die Kantenstücke derart geformt sind, daß sie über die die Kanten verbindenden Seitenflächen (1, 2, 3) der Kassette nicht hinausragen.

2. Röntgenfilmkassette nach Anspruch 1, deren Länge und Breite größer ist als deren Höhe, dadurch gekennzeichnet, daß die gummielastischen Kantenstücke entlang den zur Höhe(h) parallelen Kanten angeordnet sind.

3. Röntgenfilmkassette nach Anspruch 1 oder 2, dadurch gekennzeichnet, daß die gummielastischen Kantenstücke mittels einer Schwalbenschwanz-Führung (11) an der Kassette gehalten sind.

4. Röntgenfilmkassette nach einem der vorhergehenden Ansprüche, dadurch gekennzeichnet, daß die Kantenstücke derart geformt sind, daß ihre auf die zur Höhe (h) parallelen Kanten hinweisenden Seitenflächen (7-10) in der Ebene der jeweils entsprechenden Seitenflächen (1-3) der Kassette liegen.

5. Röntgenfilmkassette nach einem der vorhergehenden Ansprüche, dadurch gekennzeichnet, daß die Kantenstücke (5) aus Gummi oder gummielastischem Kunststoff bestehen.

**Claims**

1. X-ray film cassette in the shape of a rectangular parallelepiped, consisting of dimensionally stable plastic, characterised in that rubber-elastic edge pieces (5) are arranged along at least four mutually opposing edges, in that the cassette has an indentation (4) in the area of each of the edges provided with the edge pieces (5), in that the edge pieces are joined to these indentations and in that the edge pieces are shaped in such a manner that they do not project beyond the side faces (1, 2, 3) connecting the edges.

2. X-ray film cassette according to Claim 1, the length and width of which are greater than the depth thereof, characterised in that the rubber-elastic edge pieces are arranged along the edges parallel to the depth (h).

3. X-ray film cassette according to Claim 1 or 2, characterised in that the rubber-elastic edge pieces are held to the cassette by means of a dovetail joint (11).

4. X-ray film cassette according to one of the preceding claims, characterised in that the edge pieces are shaped in such a manner that their side faces (7-10) pointing towards the edges parallel to the depth (h) are level with the respective corresponding side faces (1-3) of the cassette.

5. X-ray film cassette according to one of the preceding claims, characterised in that the edge pieces (5) consist of rubber or rubber-elastic plastic.

**Revendications**

1. Cassette de film radiographique de forme parallélépipédique en matière plastique indéformable, caractérisée par le fait que des coins (5) ayant l'élasticité du caoutchouc sont disposés le long d'au moins quatre arêtes respectivement opposées, que la cassette présente, dans le secteur de l'arête munie des coins (5), un évidement (4), que les coins sont insérés dans ces évidements et que les coins sont conformés de telle sorte qu'ils ne font pas saillie hors des faces latérales (1, 2, 3) de la cassette qui relient les arêtes.

2. Cassette de film radiographique selon la revendication 1, dont la longueur et la largeur sont plus grandes que la hauteur, caractérisée par le fait que les coins ayant l'élasticité du caoutchouc sont disposés suivant les arêtes parallèles à la hauteur (h).

3. Cassette de film radiographique selon la revendication 1 ou 2, caractérisée par le fait que les coins ayant l'élasticité du caoutchouc sont fixés à la cassette au moyen d'un guide en queue d'aronde (11).

4. Cassette de film radiographique selon l'une des revendications précédentes, caractérisée par le fait que les coins sont conformés de telle sorte que leurs faces latérales (7, 10), qui forment les arêtes parallèles espacées de la hauteur (h), se situent dans le plan des faces latérales (1-3) respectives correspondantes de la cassette.

5. Cassette de film radiographique selon l'une des revendications précédentes, caractérisée par le fait que les coins (5) sont constitués par du caoutchouc ou une matière plastique ayant l'élasticité du caoutchouc.

Fig. 1

Fig. 2

1